# EUROPÄISCHE PATENTSCHRIFT

(11) **EP 2 315 410 B1**
(45) Veröffentlichungstag und Bekanntmachung des Hinweises auf die Patenterteilung: **17.08.2016**
(21) Anmeldenummer: 10008799.8
(22) Anmeldetag: 24.08.2010
(51) Int. Cl.: H04W 80/10, H04W 76/00, H04L 29/06, H04W 4/10, H04W 84/08, H04L 29/08

(54) **Bündelfunksystem auf Basis von Sprache-über-Internet Protokoll und entsprechendes Betriebsverfahren**
Trunked radio system on the basis of a VoIP protocol and corresponding operating method
Système radio de faisceau basé sur un protocole vocal par Internet et procédé de fonctionnement correspondant

(30) Priorität: 05.10.2009 DE 102009048251
(43) Veröffentlichungstag der Anmeldung: 27.04.2011
(73) Patentinhaber: Hytera Mobilfunk GmbH, 31848 Bad Münder (DE)
(72) Erfinder: Zeuschner, Michael, 31542 Bad Nenndorf (DE); Hucke, Martin, 30161 Hannover (DE); Klausing, Matthias, 31832 Springe (DE); Siegmund, Gerd, Dr., 70435 Stuttgart (DE)
(74) Vertreter: Körfer, Thomas

(56) Entgegenhaltungen:
- WO-A1-2007/088247
- DE-A1-102006 062 748
- US-A1- 2006 046 697
- BLOM R ET AL: "Public Safety Communication Using Commercial Cellular Technology", NEXT GENERATION MOBILE APPLICATIONS, SERVICES AND TECHNOLOGIES, 2008. NGMAST '08. THE SECOND INTERNATIONAL CONFERENCE ON, IEEE, PISCATAWAY, NJ, USA, 16. September 2008 (2008-09-16), Seiten 291-296, XP031409679, ISBN: 978-0-7695-3333-9

## Beschreibung

Die Erfindung betrifft ein Bündelfunksystem, insbesondere ein TETRA-Bündelfunksystem, in dem ein Bündelfunk-Endgerät über eine Bündelfunk-Luftschnittstelle mit einer Basisstation in Kontakt steht und zum Austausch von Information eine Kommunikationsverbindung aufbaut, die über ein Transportnetz zwischen den Basisstationen übertragen wird, sowie ein Verfahren zum Betreiben eines solchen Bündelfunksystems.

Digitale Bündelfunksysteme, wie z.B. ein vom Europäischen Telekommunikations- und Standardisierungs-Institut (ETSI) spezifiziertes TETRA-Bündelfunksystem, lösen mehr und mehr die analogen Bündelfunksysteme ab. Die TETRA-Luftschnittstelle wurde in der Standardisierung durch enge Festlegungen definiert. Sie bietet auch bei schlechten Übertragungsbedingungen eine zuverlässige Verbindung und ist spektral effizient. Ein terrestrisches Übertragungs- und Signalisierungssystemen ist jedoch nicht vom Standard festgelegt. Bestehende TETRA-Bündelfunksysteme sind vor allem für Zeitmultiplex(TDM)-Übertragungs- und Vermittlungssysteme realisiert worden.

In allen Bereichen der Telekommunikation werden immer häufiger Sprache-über-Internet (Voice oder IP) Protokoll-Systeme eingeführt, in denen auch Sprachverbindungen über ein Internet Protokoll basiertes Signalisierungs- und Transportsystem gesteuert und übertragen wird. Sowohl für private als auch für öffentlichen Mobil- und Festnetze stellt dabei das Verbindungseinleitungsprotokoll (Session Initiation Protocol, SIP) die Basis für die Steuerung der Verbindungen dar.

In Sprache-über-Internet Protokoll-Systemen liegt ein Großteil der Steuerungslogik für den Verbindungsauf- und abbau in den Endgeräten selbst. Die große Anzahl herkömmlicher Zeitmultiplex (TDM)-Vermittlungsanlagen werden durch wenige Netzelemente zur Verbindungssteuerung und Internet Protokoll (IP)-Router für den Transport der Verbindungen ersetzt. Insbesondere die in großen Stückzahlen hergestellten Router, die auch für andere Netzwerke, wie z.B. Computernetze, verwendet werden, sind kostengünstig in der Anschaffung. Andererseits sind Änderungen in der Systemsteuerung, z.B. zur Unterstützung neuer Dienste oder zur Fehlerbehebung durch eine Anpassung in den wenigen Steuerungsnetzelementen beschränkt und reduzieren damit die Betriebskosten. Somit ist ein Sprache-über-Internet Protokoll-Netz kostengünstiger in der Anschaffung und im Betrieb.

Ein weiterer Vorteil von Sprache-über-Internet Protokoll-Netzen liegt in der Erweiterbarkeit auf breitbandige Datendienste. Dabei können große Datenmengen, wie z.B. Bild- oder Videodaten, in kurzer Zeit über breitbandige Verbindungen übertragen werden.

DE 10 2006 062748 beschreibt ein System in welchem push-to-talk in einem TETRA Bündelfunksystem implementiert wird.

BLOM R ET AL: "Public Safety Communication Using Commercial Cellular Technology", NEXT GENERATION MOBILE APPLICATIONS, SERVICES AND TECHNOLOGIES, 2008. NGMAST '08. THE SECOND INTERNATIONAL CONFERENCE ON, IEEE, PISCATAWAY, NJ, USA, 16. September 2008 beschreibt die Implementation eines Bündelfunksystems mittels IMS.

US 2006/046697 beschreibt Verfahren welche die Zusammenarbeit von Bündelfunksystemen mit anderen Mobilfunksystemen ermöglichen.

WO 2007/088247 beschreibt die Zusammenarbeit zwischen TETRA und PLMN.

Eine Einbindungsmöglichkeit eines TETRA-Bündelfunksystems in ein Sprache-über-Internet Protokoll-Netz ist in der DE 10 2006 062 748 A1 aufgezeigt. Hierbei wird ein TETRA-Endgerät beschrieben, das neben einer herkömmlichen TETRA Sprachverbindung eine IP basierte Sprach- oder Datenverbindung zu Endgeräten in einem öffentlichen Sprache-über-Internet Protokoll fähigen Mobilfunknetz aufbauen kann. Um Bündelfunkspezifische Dienste, wie einen Gruppenruf durchführen zu können, wird der Wechselsprech (PoC)-Dienst, der als Push-to-Talk-over-Cellular (PoC)-Dienst in mobilen Sprache-über-Internet Protokoll-Netzen definiert ist, zur Verbindungssteuerung verwendet. Dazu ist in einem TETRA-Endgerät ein zusätzliches PoC-Dienstnutzerprogramm (Client) enthalten, so dass Informationen über einen TETRA Funkkanal mit einem PoC-Dienstanbieterprogramm (Server) ausgetauscht werden und eine Kommunikation mit anderen Sprache-über-Internet Protokoll-Endgeräten und auch zu entsprechend erweiterten TETRA-Endgeräten über ein öffentliches Sprache-über-Internet Protokoll-Netz möglich ist. Das verwendete PoC-Dienstanbieterprogramm und ein für die Verfügbarkeit der PoC Dienstnutzerprogramm zuständiges Präsenzdienst-Dienstanbieterprogramm sind dabei Netzkomponenten des Sprache-über-Internet Protokoll-Netzes.

Der Nachteil dieser Lösung liegt darin, dass die Vermittlungs- und Übertragungssysteme des zugrundeliegenden TETRA-Netzes weiterhin auf herkömmliche TDM Technik beruhen. Damit ist keine Weiterentwicklung der TETRA-Netzinfrastruktur hin zur kostengünstigen, breitbandigen und modernen Internet Protokoll basierten Übertragungs- und Steuerungselementen möglich. Des Weiteren können lediglich Dienste, die ein mobiles Sprache-über-Internet Protokoll-Netz bereitstellt, genutzt werden, aber keine Bündelfunk-spezifischen Dienste neu eingeführt oder erweitert werden. Ein Zusammenwirken oder eine Integration eines TETRA-Netzes in ein bestehendes Sprache-über-Internet Protokoll-Netz sind somit nur sehr eingeschränkt möglich.

Es ist daher die Aufgabe der Erfindung, ein Bündelfunksystem und ein entsprechendes Betriebsverfahren zu schaffen, das einerseits die robuste und spektraleffiziente Luftschnittstelle eines Bündelfunksystems aufweist, die günstigere und moderne Internet Protokoll-basierte Infrastruktur nutzt und eine Erweiterung auf breitbandige Internet Protokoll basierte Dienste sowie ein Zusammenwirken oder eine Integration in ein vorhandenes Sprach-über-Internet Protokoll-Netz ermöglicht.

Die Aufgabe wird durch das erfindungsgemäße Bündelfunksystem gemäß Anspruch 1 und das entsprechende Betriebs-Verfahren gemäß dem Anspruch 7 gelöst. In den Unteransprüchen sind vorteilhafte Weiterbildungen des erfindungsgemäßen Systems dargestellt. In dem erfindungsgemäßen Bündelfunksystem, insbesondere in einem TETRA-Bündelfunksystem, steht ein Bündelfunk-Endgerät über eine Bündelfunk-Luftschnittstelle mit einer Basisstation in Kontakt. Zum Austausch von Information ist eine Kommunikationsverbindung aufgebaut, zu deren Steuerung ein SIP-Protokoll verwendet wird. Die Information wird zwischen den Basisstationen über ein Transportnetz, das auf einem Internet Protokoll-basierten Übertragungsnetz basiert, übertragen. Die Erfassung des Aufenthaltsorts des Bündelfunk-Endgerätes erfolgt über einen Präsenzdienst (Presence Service), der für Internet Protokoll-Netze standardisiert ist, in einer Aufenthaltsverwaltung.

In vorteilhafterweise können somit handelsübliche Router und andere IP-Komponenten zum Aufbau des Transportnetzes verwendet werden. Diese sind kostengünstig und in unterschiedlichen Kapazitäten verfügbar. Durch das bereits in Sprache-über-Internet Protokoll-Netzen verwendete SIP-Protokoll und den für Internet Protokoll-Netze standardisierten Präsenzdienst können getestete und funktionierende Funktionalitäten eingesetzt werden, so dass der Entwicklungsaufwand für Bündelfunk-spezifischen Anpassungen sowie der Testaufwand in einem überschaubaren Rahmen bleiben.

Des Weiteren ist mindestens ein auf einen Telekommunikationsstandard für den Push-to-Talk-over-Cellular-Dienst basierender PoC-Dienstanbieter (PoC-Server) im Bündelfunksystem vorhanden, der einen Gruppenruf steuert. Somit kann auch ein Gruppenruf, der eine wichtige Funktionalität im Bündelfunksystem darstellt, durch einen zum Großteil bereits vorhandenen und bewährten Dienst erbracht werden, so dass nur geringe Bündelfunk-spezifische Anpassungen notwendig sind.

Vorteilhafterweise ist für jedes Bündelfunk-Endgerät ein Bündelfunk-spezifischer SIP-Endsystemteil (SIP-User Agent) in einer Basisstation vorhanden ist. Dadurch kommuniziert das SIP-Protokoll mit der Basisstation. Das Bündelfunk-Endgerät selbst bleibt unverändert und muss nicht, wie sonst üblich, mit einem SIP-Endsystemteil erweitert werden. Somit können vorhandene Bündelfunk-Endgeräte unverändert weiterverwendet werden. Teure Sondermodelle sind nicht notwendig.

Es ist ebenfalls vorteilhaft, dass beim Grupperuf, d.h. beim Ruf alle Bündelfunk-Endgeräte, die einer Gruppe angehören, erst eine Kommunikationsverbindung zum zuständigen PoC-Dienstanbieter (PoC-Server) aufgebaut wird, danach jeweils eine Kommunikationsverbindung vom PoC-Dienstanbieter zu jeder Basisstation, in der mindestens ein Bündelfunk-Endgerät der Gruppe eingerichtet ist, aufgebaut wird und diese Basisstation alle Bündelfunk-Endgeräte der Gruppe, die in der Basisstation eingerichtet sind, kontaktiert. Diese Zustellung der Information an jedes Bündelfunk-Endgerät der Gruppe nutzt äußerst effizient die Transportleitungen, da die Information bis zu den Basisstationen in einer einzigen Kommunikationsverbindung transportiert wird. Erst in der Basisstation, an der ein oder mehrere Bündelfunk-Endgeräte der Gruppe angebunden sind, wird die Information vervielfältigt und in separaten Kommunikationsverbindungen an die Bündelfunk-Endgeräte der Gruppe übertragen.

Vorteilhaft ist ebenfalls, ein Mobilfunk-Endgerät eines öffentlichen Mobilfunknetzes zu verwenden, das mit einem Bündelfunk-spezifischen SIP-Dienstnutzer ergänzt ist, an einem PoC-Dienstanbieter und an einer SIP-Steuerungseinheit des Bündelfunksystems registrierbar ist und damit als Bündelfunk-Endgerät im Bündelfunksystem an Kommunikationsverbindungen teilnimmt. Dadurch können Mobilfunk-Endgeräte auch in Gebieten ohne Bündelfunksystemabdeckung mit Bündelfunk-Endgeräten kommunizieren bzw. es können mit dem gleichen Endgerät Gespräche ins öffentliche Netz geführt werden.

Von Vorteil ist auch, dass der PoC-Dienstanbieter und eine SIP-Steuerungseinheit an ein öffentliches Mobilfunknetz, insbesondere UMTS- oder LTE-Netz, angebunden ist und die Kommunikationsverbindungen des Bündelfunksystems über ein Internet Protokoll des öffentlichen Mobilfunknetzes geführt ist. Dadurch kann ein als Dienst innerhalb eines UMTS- bzw. LTE-Netzes angeboten werden und das vorhandene Internet Protokoll-Transportnetz des Universelles Mobiles Telekommunikations-System (UMTS)- bzw. Langzeit Evolutions (LTE)-Netzes mitbenutzen. Dadurch kann das Internet Protokoll-Transportnetz effizient ausgelastet und das Bündelnetz kostengünstig betrieben werden sowie die Dienste des öffentlichen Mobilfunknetzes im Bündelfunksystem mitverwendet werden.

Die Erfindung wird im Folgenden anhand eines Ausführungsbeispiels und mit Bezug auf die Zeichnungen beispielhaft näher erläutert. Es zeigen:
- Fig. 1: ein Ausführungsbeispiel eines erfindungsgemäßen Bündelfunksystems;
- Fig. 2: ein Ausführungsbeispiel einer erfindungsgemäßen Basisstation in schematischer Darstellung;
- Fig. 3: ein Ausführungsbeispiel einer erfindungsgemäßen Cluster-Steuereinheit in schematischer Darstellung;
- Fig. 4: eine schematische Darstellung einer erfindungsgemäßen hierarchischen Aufenthaltsverwaltung;
- Fig. 5: eine erfindungsgemäße Kommunikationsverbindung während eines Verbindungsübergabe zu einer Basisstation des gleichen bzw. eines anderen Clusters;
- Fig. 6: ein erfindungsgemäßes Ausführungsbeispiel einer Kommunikationsverbindung für einen Gruppenruf mit einem PoC-Dienstanbieter in jeder Basisstation;
- Fig. 7: eine schematische Darstellung eines erfindungsgemäßen Ausführungsbeispiels zur Einbindung eines Mobilfunkgerätes eines öffentlichen mobilen Sprache-über Internet Protokoll-Netzes in ein erfindungsgemäßes Bündelfunksystem und
- Fig. 8: eine schematische Darstellung eines erfindungsgemäßen Ausführungsbeispiels eines Bündelfunksystems, das in ein öffentliches mobiles Sprache-über-Internet Protokoll-Netz integriert ist.

Einander entsprechende Teile sind in allen Figuren mit den gleichen Bezugszeichen versehen.

Es sei darauf hingewiesen, dass die in der Beschreibung verwendeten deutschen Bezeichnungen bzw. Abkürzungen den folgenden englischen Fachausdrücken entsprechen:

| | |
|---|---|
| Internet Protokoll (IP) | Internet Protocol |
| Teilnehmer-Datagramm-Protokoll (UDP) | User Datagram Protocol |
| Echtzeitprotokoll (RTP) | Real-Time Protocol |
| Verbindungseinleitungsprotokoll (SIP) | Session Initiation Protocol |
| Echtzeit-Transport-Steuerungs | Real-Time Transport |
| Protokoll (RTCP) | Control Protocol |
| Sprachbündel-Steuerungs-Protokoll (TBCP) | Talk Burst Control Protocol |
| Wechselsprechdienst (PoC) | Push to Talk over Cellular Service |
| Verbindungseinleitungprotokoll-Terminierungs-Endsystemteil | SIP-Back-to-Back User Agent |
| Verbindungsgrenz-Steuereinheit (SBC) | Session Border Control |
| Sprache-über-Internet Protokoll | Voice-over-IP |
| Terminierungs-Endsystemteil | Agent |
| Verbindungsübergabe | Handover |
| Aufenthaltsbereich (LA) | Location Area |
| Kurzidentität des Teilnehmers (SSI) | Short Subscriber Identifier |
| einheitlichen Resource Identität (URI) | Uniform Resource Identifier |
| Dienstnutzer oder -programm | Client |
| Dienstanbieter oder -programm | Server |
| Endsystemteil | User Agent |
| Bandbreiten-Zugangskontrollfunktion | Admission Control |

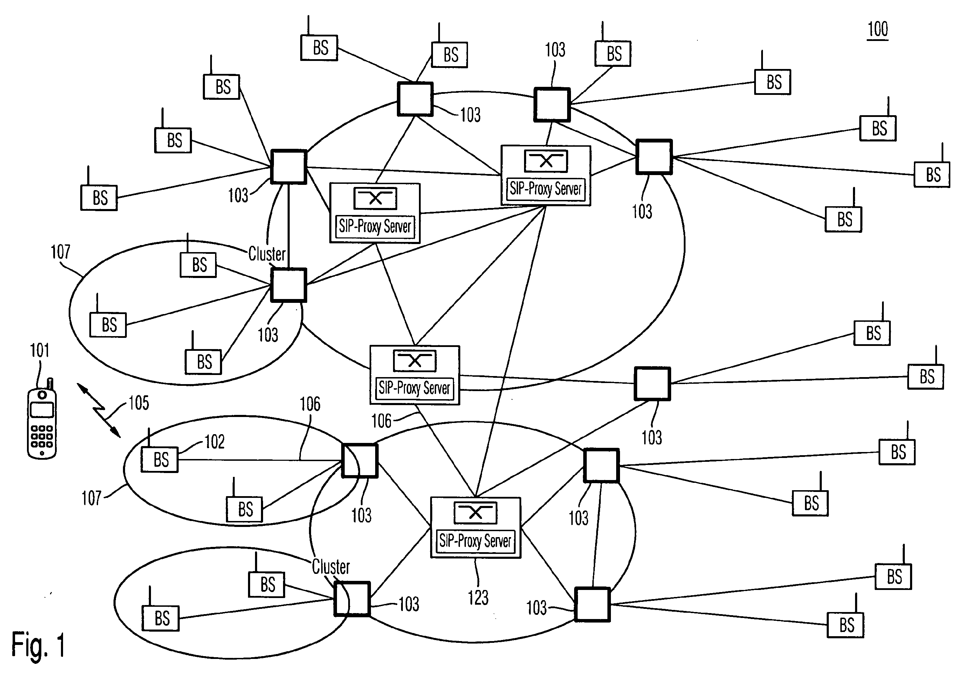

Fig. 1 zeigt ein Ausführungsbeispiel eines erfindungsgemäßen Bündelfunksystems 100 in schematischer Darstellung. Ein herkömmliches Bündelfunk-Endgerät 101, z.B. entsprechend dem vom Europäischen Telekommunikations- und Standardisierungs-Instituts (ETSI) spezifizierten TETRA Standard, steht über eine TETRA-Luftschnittstelle 105 mit der Basisstation 102 in Verbindung. Die Basisstationen 102 sind über IP-Verbindungsleitungen 106 eines IP-Transportnetzes miteinander verbunden. Mehrere Basisstationen 102 sind logisch zu einem Cluster 107 zusammengefasst und werden von einer Cluster-Steuereinheit 103 gesteuert. Der Auf- und Abbau einer Kommunikationsverbindung wird durch das Verbindungseinleitungsprotokoll (SIP), das für Sprache-über-Internet Protokoll Netze spezifiziert ist, und SIP-Dienstanbieterprogramme 123 gesteuert.

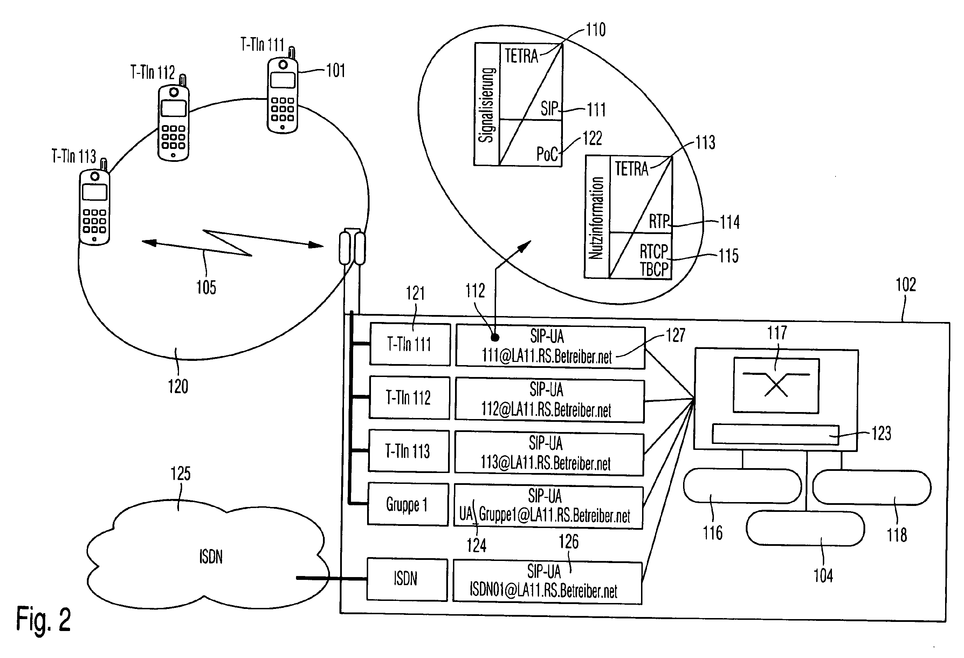

Im erfindungsgemäßen Bündelfunksystem 100 sind, wie in Fig. 2 dargestellt, Übergangsfunktionen in der Basisstation 102 enthalten, in denen die TETRA-Signalisierung 110 bearbeitet und in das SIP-Protokoll übersetzt wird. Hierzu ist pro Bündelfunk-Endgerät 101 ein SIP-Endsystemteil 112 in der Basisstation 102 vorgesehen. Die Steuerung insbesondere von Gruppenrufen wird über eine Signalisierung, die für den Wechselsprechdienst (PoC)-Dienst spezifiziert ist, durchgeführt. Die Nutzinformationen 113 werden, so wie sie von der TETRA-Luftschnittstelle 105 empfangen werden, in Echtzeitprokokoll (RTP)-Pakete 114 umgesetzt und innerhalb des Bündelfunksystems 100 über das Teilnehmer-Datagramm Protokoll (UDP) und Internet Protokoll (IP) transportiert. Steuerungsnachrichten, die die Kommunikationsverbindung mittels RTP-Pakete 114 betreffen, werden über Echtzeit-Transport-Steuerungs-Protokoll (Real-Time Transport Control Protocol, RTCP) und Sprachbündel-Steuerungs-Protokoll (Talk Burst Control Protocol, TBCP)-Pakete 115 übertragen. Die TETRA-Luftschnittstelle 105 bleibt völlig unverändert und entspricht der bisherigen Realisierung und dem TETRA-Standard.

In der Basisstation 102 ist für jedes registrierte Bündelfunk-Endgerät 101 ein SIP-Endsystemteil 112 vorhanden. Die SIP Endsystemteile 112 werden nach der Registrierung des Bündelfunk-Endgeräts 101 automatisch konfiguriert. Zu der Basisstation 102 gehört auch jeweils ein SIP-Registrar 116 in dem die SIP-Endsystemteile 112 registriert sind. In kleinen Konfigurationen kann eine Basisstation 102 allein als vollständiges System betrieben werden. Hierzu ist auch eine Vermittlungsfunktion 117 in der Basisstation 102 vorgesehen.

Eine Basisstation 102 verwaltet im dargestellten Ausführungsbeispiel einen Aufenthaltsbereich (Location Area, LA) 120. Es können aber auch mehrere Aufenthaltsbereiche 120 in einer Basisstation 102 verwaltet werden. Eine Endgeräte-SIP-Adresse 127 im System wird durch die Kurzidentität des TETRA-Endgeräts (TETRA-SSI) 121 und den Aufenthaltsbereich 120, in der das Bündelfunk-Endgerät 101 mit seinem SIP-Endsystemteil 112 registriert ist, gebildet.

Ist das Bündelfunk-Endgerät 101 mit der Kurzidentität (SSI) "111" z.B. in dem Aufenthaltsbereich (LA) 120 mit der Nummer "11" registriert, dann ist seine SIP-Adresse: 111@LA11.RS.Betreiber.net. Die Abkürzung RS kann dabei für einen Basisstations-Hersteller stehen, "Betreiber" für die jeweilige Bezeichnung des Netzbetreibers und "net" für die höchste (Top Level) Domänenebene. Sie könnte auch .de, .at oder .com usw. sein. Diese Adresse 127 ist weltweit eindeutig und dem TETRA-Bündelfunksystem 100 zugehörig.

Für einen, in Bündelfunksystemen üblichen, Gruppenruf ist ein Gruppen SIP-Endsystemteil 124 vorgesehen. Eine Gruppenzugehörigkeit wird in einem Wechselsprechdienst (PoC)-Dienstanbieter 104 per Gruppenmanagement eingerichtet. Im PoC-Dienstanbieter 104 werden nur die Gruppen eingerichtet. Die Adressierung der Gruppen durch die Bündelfunk-Endgeräte 101 erfolgt mit der Gruppen-Kurzidentität (GSSI) und dem Zusatz POC, z.B.: Gruppe1: GSSI_1.POC@LA11.CL1.RS.Betreiber.net. Eine Verteilung der Nutzinformationen und die Regelung eines Senderechts bei mehreren Bündelfunk-Endgeräten 101 dieser Basisstation 102 regelt die Basisstation 102 intern, nicht der PoC-Dienstanbieter 104. Der PoC-Dienstanbieter 104 regelt die Zuteilung des Senderechts und die Verteilung der Nutzinformationen Aufenthaltsbereich übergreifend.

Für den Übergang ins Festnetz sind eigene Endsystemteile 126 vorgesehen, die sowohl die Signalisierung, als auch die Nutzinformationen an das jeweilige Netz anpassen. Die Übergänge sind über eine Kennzahl erreichbar.

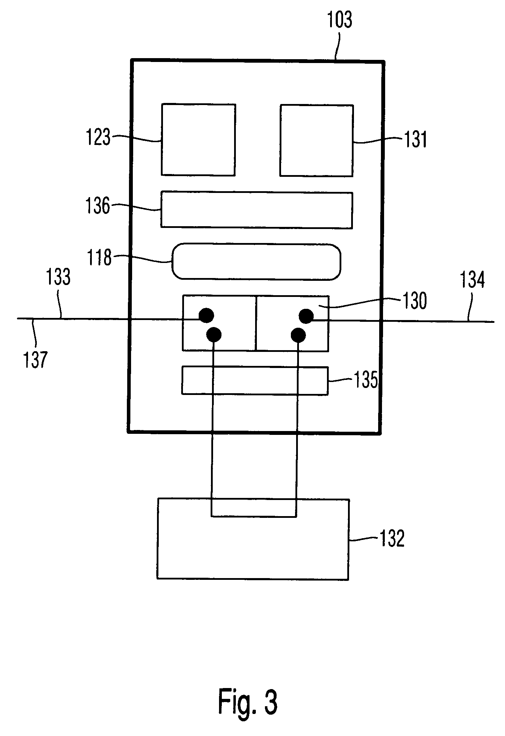

Das Bündelfunksystem 100 wird aus virtuellen Wegen zwischen den einzelnen Basisstationen 102 und sonstigen Bündelfunk-Netzkomponenten gebildet und im IP-Transportnetz angelegt. Beim Aufbau der virtuellen Wege werden Dienstgüte (QoS)-Mechanismen genutzt, die die bereitgestellte Bandbreite jedem virtuellen Weg zuteilt und die Gesamtbandbreite der IP-Verbindungsleitung 106 überwacht. Die virtuellen Wege werden mit ihren Bandbreiten zentral in einer Datenbank durch eine Bandbreiten-Zugangskontrollfunktion (Admission Control) 118 in der Basisstation 102 oder in einer Cluster-Steuereinheit 103, siehe Fig. 2 und Fig.3, verwaltet.

In kleinen Bündelfunksystemen kann eine Basisstation 102 allein verwendet werden, mehrere Basisstationen 102 sind miteinander verbunden und erst in größeren Bündelfunksystemen 100, siehe Fig. 1, oder aus Gründen der Dienstgüteverwaltung bzw. der besseren Unterstützung von Aufenthaltsverwaltung und einer Verbindungsübergabe wird ein Zusammenschluss mehrerer Basisstationen 102 zu einem Cluster 107 mit einer Cluster-Steuereinheit 103 notwendig. In einem Bündelfunksystem ohne eigenständige Cluster-Steuereinheit 103 übernimmt eine der Basisstationen 102 die Funktion der Cluster-Steuereinheit 103.

Jede Kommunikationsverbindung wird über einen oder mehrere Cluster-Steuereinheiten 103 geführt und gesteuert. Fig. 3 zeigt eine solche Cluster-Steuereinheit 103. Die Cluster-Steuereinheit 103 enthält neben einem SIP-Dienstanbieter (123) einen Verbindungseinleitungs-Terminierungs-Endsystemteil (SIP Back-to-Back User Agent) 131, das Kommunikationsverbindungen nach beiden Seiten logisch terminiert. Er teilt eine Kommunikationsverbindung 137 in zwei logische Teilverbindungen 133, 134 auf. Der SIP-Terminierungs-Endsystemteil 131 kann in den Verbindungsaufbau eingreifen und die Quell- und Ziel-Adresse verändern. Beim Verbindungsaufbau wird vom SIP-Terminierungs-Endsystemteil 131 die Ziel-Adresse in die aktuelle SIP-Adresse des gerufenen Bündelfunk-Endgeräts 101 umgewandelt.

Für ein Mitschneiden von laufenden Gesprächen ist die Cluster-Steuereinheit 103 als ein Verbindungsgrenz-Steuereinheit (Session Border Controller, SBC) 135 ausgeführt. Die Verbindungsgrenz-Steuereinheit 135 kann auch die Nutzinformationen bearbeiten, speichern oder beeinflussen. Da jede Kommunikationsverbindung 137 mindestens über eine Cluster-Steuereinheit 103 geführt wird, kann eine Kommunikationsverbindung 137 über eine an eine Cluster-Steuereinheit 103 angebundene Aufzeichnungseinrichtung 132 mitgehört und/oder aufgezeichnet werden.

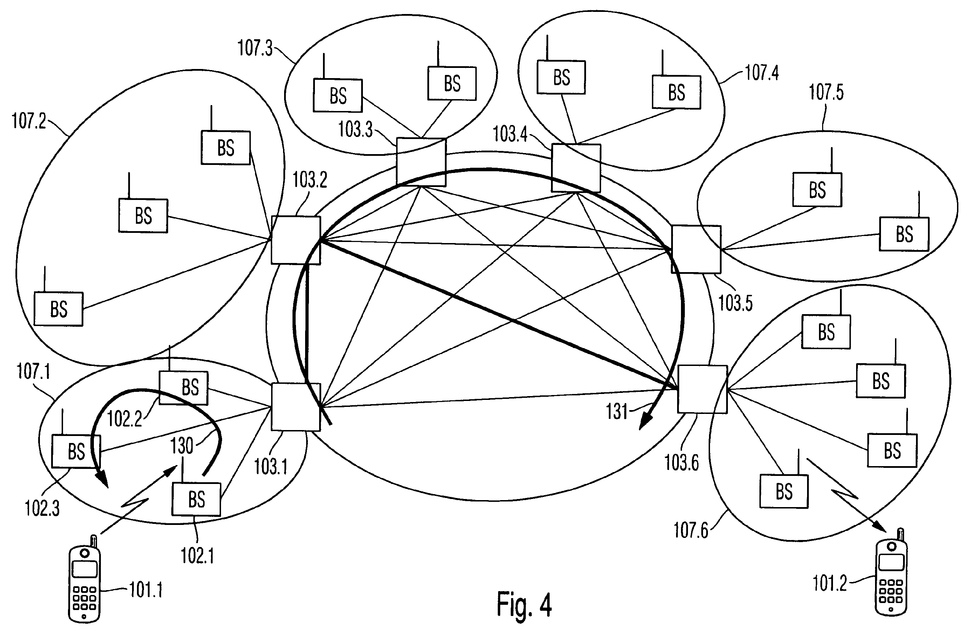

Die Aufenthaltsverwaltung erfolgt mit Hilfe des Präsenzdienstes. Je Cluster 107 ist ein Präsenz-Dienstanbieter 136 in der Cluster-Steuereinheit 103 enthalten. Wie in Fig. 4 dargestellt ist die Aufenthaltsverwaltung und somit der Präsenzdienst hierarchisch organisiert. Wechselt ein Bündelfunk-Endgerät 101.1 die Basisstation innerhalb eines Cluster 107.1, werden alle Basisstationen 102.1, 102.2, 102.3 und die Cluster-Steuereinheit 103.1, dargestellt durch den Pfeil 130, informiert. Bei einem Wechsel zwischen verschiedenen Clustern 107.1, 107.2, 107.3, 107.4, 107.5, 107.6 werden alle Cluster-Steuereinheit 103.1, 103.2, 103.3, 103.4, 103.5, 103.6, dargestellt durch den Pfeil 131, informiert. Für den Austausch der Informationen auf der Ebene der Cluster-Steuereinheiten 131 ist ein eigener Präsenz-Dienstanbieter 136 in einer Cluster-Steuereinheit, siehe Fig. 3, vorhanden.

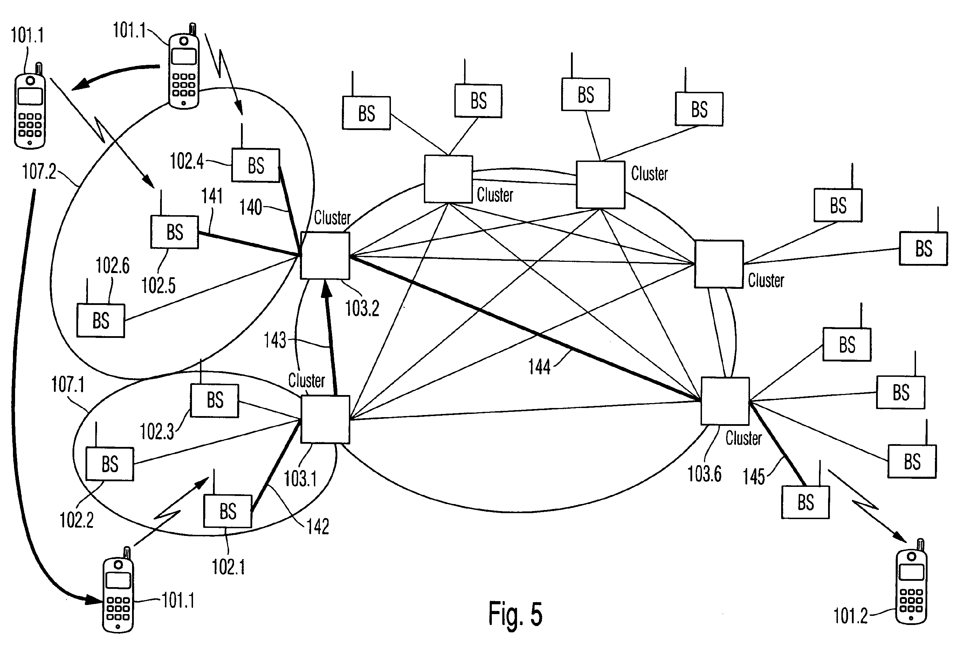

Fig. 5 zeigt eine Kommunikationsverbindung bestehend aus den Teilverbindungen 140, 144, 145 während eines Handovers. Das Bündelfunk-Endgerät 101.1 befindet sich im Gesprächszustand mit dem Bündelfunk-Endgerät 101.2. Aufgrund eines Ortswechsels ändert das Bündelfunk-Endgerät 101.1 seinen Aufenthaltsbereich von Basisstation 102.4 zur Basisstation 102.5. Die Anmeldung in der Basisstation 102.5 verursacht ein Reporting im Präsenzdienst, d.h. an alle Basisstationen 102.4, 102.5, 102.6 geht die Information, dass sich das Bündelfunk-Endgerät 101.1 in der neuen Basisstation 102.5 befindet. Die Nachricht geht an einen virtuellen Endsystemteil in jeder Basisstation 102 des eigenen Clusters 107.2 und an die eigene Cluster-Steuereinheit 103.2. Über die eigene Cluster-Steuereinheit 103.2 ist das Bündelfunk-Endgerät 101.2 immer noch im Gespräch mit dem Bündelfunk-Endgerät 101.1 in der Basisstation 102.5.

Aufgrund des Wechsels des Aufenthaltsbereiches baut der B2B-User-Agent 131 in der Cluster-Steuereinheit 103.2 eine Verbindung 141 zum Endsystemteil des Bündelfunk-Endgeräts 101.1 in der Basisstation 102.5 auf. Danach existieren zwei Verbindungen 140, 141 zum Bündelfunk-Endgerät 101.1, eine über die Basisstation 102.4 und eine über die Basisstation 102.5. Parallel wird das Bündelfunk-Endgerät 101.1 über den Aufbau der Nutzverbindung 141 informiert, es kann die Verbindungsübergabe durchführen. Nach Abschluss der Verbindungsübergabe wird die Verbindung 140 zwischen der Basisstation 102.4 und der Cluster-Steuereinheit 103.2 abgebaut. Die Verbindung 144 zwischen der Cluster-Steuereinheit 103.2 und der Cluster-Steuereinheit 103.6 ändert sich nicht.

Dieser Verbindungsübergabe-Mechanismus funktioniert auf die gleich Weise, wenn beim Verbindungsübergabe das Cluster, z.B. von 107.2 nach 107.1, gewechselt wird. Um für ein gleichzeitiges, beidseitiges Verbindungsübergabe einen festen Anker-Punkt im Bündelfunksystem zu erhalten, ändern sich die ursprünglich beim ersten Verbindungsaufbau verwendeten Cluster-Steuereinheiten 103.2 und 103.6, auch im Falle von mehrfachen Verbindungsübergaben, nicht. Die Kommunikationsverbindung führt nach der Verbindungsübergabe über die Teilverbindungen 142, 143, 144, 145. Erst wenn die Kommunikationsverbindung zwischen 101.1 und 101.2 ausgelöst wird, wird auch die Teilverbindung 144 freigegeben.

Zur Anpassung der TETRA-Signalisierung an die Sprache-über Internet Protokoll-Übertragung und die Verwendung von SIP für die Steuerung der Verbindungen, werden die Funktionen und Festlegungen des PoC-Dienstes für das Bündelfunksystem genutzt. Insbesondere das Sprecherrecht ist bereits im PoC-Dienst geregelt und lässt sich für die Bündelfunk-Anwendung nutzen. Die Rufvarianten des Bündelfunksystems werden wie folgt auf SIP umgesetzt.

Ein Einzelruf mit gleichzeitiger Sprachübertragung für die Hin- und Rückrichtung (duplex) wird auf einen Standard-SIP-Gesprächsaufbau umgesetzt.

Der Gruppenruf wird als PoC-Dienst realisiert. Hierzu wird der PoC-Dienstanbieter 104 verwendet. Das Senderecht wird durch das Sprachbündel-Steuerungs-Protokoll (TBCP), siehe Fig.2, oberhalb des Echtzeit-Transportsteuerungs-Protokoll (RTCP) geregelt. Die Kennzeichnung erfolgt dadurch, dass der Ruf vom PoC-Dienstanbieter 104 an die Bündelfunk-Endgeräte 101 geht.

Ein Halbduplex-Einzelruf, also eine Kommunikationsverbindung mit einseitiger Sprachübertragung, mit Umschaltung zwischen Hin- oder Rückrichtung, wird wie ein Duplex-Einzelruf behandelt. Im Netz werden beide Kommunikationsrichtungen für die gesamte Dauer der Verbindung bereitgestellt. Zur Regelung des Senderechts der an der Luftschnittstelle 105 als Halbduplex-Verbindung eingerichteten Verbindung kann das gleiche TBCP Protokoll, wie für den Gruppenruf, verwendet werden. Diese Kombination wird nicht von einem Standard-SIP-Endsystemteil unterstützt.

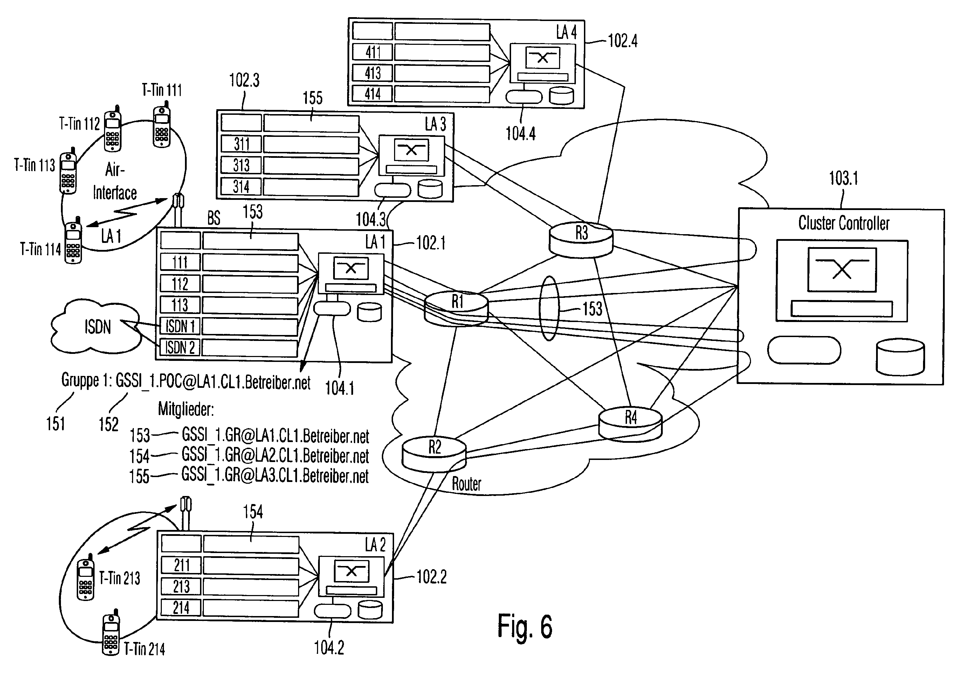

Wie in Fig. 6 dargestellt, ist der PoC-Dienstanbieter 104 als ein Anwendungs-Dienstanbieter ein- oder mehrfach im Bündelfunksystem vorhanden. Durch eine eindeutige Domänen-Adresse ist die Zuordnung einer Gruppe 151 zum zugehörigen PoC-Dienstanbieter 104.1 geregelt. Ist der PoC-Dienstanbieter 104.1 z.B. der Domäne Basisstation bzw. dem Aufenthaltsbereich LA1 und dem Cluster CL1 zugeordnet, so ist eine eindeutige SIP-Adresse der Rufgruppe in Form einer einheitlichen Resource Identität für Gruppen (Gruppen-URI) (uniform resource identifier) definiert z. B. GSSI_1.POC@LA1.CL1.RS.Betreiber.net (152). Die Gruppe wird dabei durch den Adresszusatz "POC" gekennzeichnet. Die Bündelfunk-Endgeräte einer Gruppe können dabei beliebigen Domänen angehören. Somit kann die Funktion auf verschiedene Netzelemente verteilt werden.

Mit der Einrichtung der Gruppe 151 wird neben dieser eindeutigen Gruppen-URI 152 eine zugehörige Gruppen-SSI (GSSI) zugewiesen. Unter der Gruppen-URI 152 ist die Gruppe mit SIP ansprechbar. Über die GSSI wird die Gruppe aus dem Bündelfunksystem 100 angewählt. Zusätzlich wird je Gruppe jeweils ein "virtueller" SIP-Endsystemteil 153, 154, 155 in den Basis-Stationen 102.1, 102.2, 102.3, in denen ein Gruppenrufteilnehmer registriert ist, eingerichtet und durch den Adresszusatz "GR" gekennzeichnet. Eine entsprechende "virtuelle" SIP-Adresse lautet z. B. GSSI 1.GR@LA1.CL1.RS.Betreiber.net. In den Basis-Stationen 102.1, 102.2, 102.3 wird ein Gruppenruf unter Verwendung einer GSSI auf eine zugehörige "virtuelle" URI abgebildet.

Nach einer Verbindungsanforderung auf eine Gruppen-URI 152 wird eine Verbindungsaufbaunachricht über die Cluster-Steuereinheit 103.1 zum zuständigen PoC-Dienstanbieter 104.1 der Basisstation 102.1 gesendet. Danach erfolgt ein Verbindungsaufbau vom PoC-Dienstanbieter 104.1 über die jeweiligen Cluster Controller 103.1 zu jeder einzelnen Basisstation 102.1, 102.2 und 102.3, an die Bündelfunk-Endgeräte der Gruppe angebunden sind. Ein kommender Gruppenruf wird in den Basisstationen 102.1, 102.2 und 102.3 dann auf eine TETRA-Schnittstelle abgebildet. Melden sich spezifische Bündelfunk-Endgeräte auf diesen Ruf zurück, wird kein zusätzlicher Teilnehmer-spezifischer Endsystemteil verwendet. Die Steuerung des Senderechts und die Verteilung der Sprachinformation zu den beteiligten Bündelfunk-Endgeräten regelt die Basisstation selbst.

Je Gruppe und je Basisstation gibt es immer nur eine Kommunikationsverbindung in Form eines RTP-Stroms. Somit wird von der für den PoC-Dienstanbieter zuständigen Basisstation 102.1 jeweils ein RTP-Strom über die zuständige Cluster-Steuereinheit 103.1 zu den Basisstationen 102.1, 102.2, 102.3 eingerichtet. Eine Ausnahme bildet ggf. nur ein Initiator der Gruppe. Dieser wird mit seiner spezifischen SSI zur Gruppe aufgenommen und erhält einen eigenen RTP Strom. Damit wird auch ein Einbuchen in verschiedene Aufenthaltsbereiche eines Bündelfunknetze, sogenanntes Roaming, und eine Verbindungsübergabe des Initiators zwischen verschiedenen Basisstationen unterstützt. In Fig.6 ist eine PoC-Gruppe mit den dazugehörigen Verbindungen dargestellt. Zu der Gruppe gehören Bündelfunk-Endgeräte in der LA 1, LA 2 und LA 3. Die Basis-Stationen 102.1, 102.2, 102.3 werden über die unspezifischen Endsystemteil 153, 154, 155 adressiert. Von der Basisstation 102.1, 102.2, 102.3 werden die empfangenen Sprachnachrichten über den Endsystemteil GSSI_1.GR in einem Broadcastkanal an alle interessierten Teilnehmer verteilt.

Ein Mitglied der Gruppe kann nun Sprachsignale von den Gruppenteilnehmern empfangen bzw. selbst Sprachsignale an diese senden. Die einzelnen Gruppenteilnehmer, einschließlich der Behandlung des Senderechts, einer Rufgruppe innerhalb eines Aufenthaltsbereiches LA werden durch die jeweilige Basisstation behandelt. LA-übergreifend wird das Senderecht durch das TBCP im PoC-Dienstanbieter zugeteilt.

Da die Verbindungen 153 über die Cluster-Steuereinheit 103.1 geführt werden, können die Gruppenmitglieder beliebig den Aufenthaltsbereich wechseln. Die Cluster-Steuereinheit 103.1 ist als SIP-Terminierungs-Endsystemteil 131 ausgeführt und ändert sich nicht. Bei einem Wechsel der Bündelfunk-Endgeräte in andere Cluster hinein bleiben der PoC-Dienstanbieter 104.1 und die ursprüngliche Cluster-Steuereinheit 103.1 immer erhalten. Nur dadurch sind Verbindungsübergabe-Prozeduren auf beiden Seiten gleichzeitig möglich.

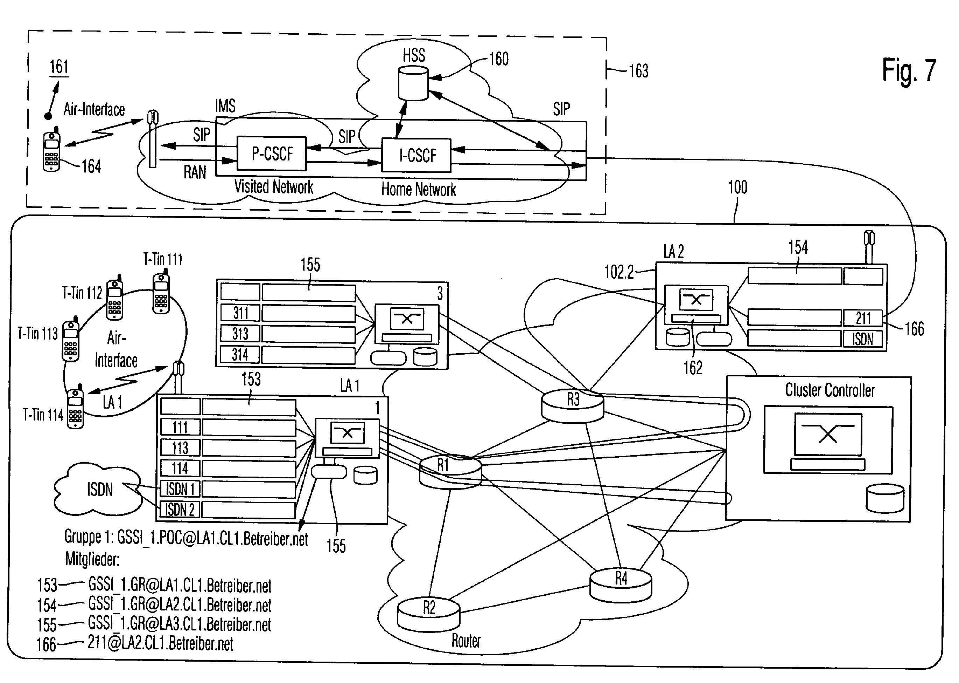

Fig. 7 zeigt, wie Einzel- und Gruppenverbindungen zu einem, mit einem spezifischen Bündelfunk-SIP-Dienstnutzer 161 erweiterten, Mobilfunk-Endgerät 164 in einem öffentlichen Mobilfunknetz 163, wie z.B. UMTS, LTE oder IMS (IP Multimedia Subsystem) unterstützt werden können. Dazu muss sich der Bündelfunk-SIP-Dienstnutzer 161 an einem PoC-Dienstanbieter 155 des Bündelfunksystems 100 anmelden. Für UMTS ist die gesamte Kommunikation eine transparente Daten-Kommunikation zu einem festgelegten Ziel im Internet. Die zuständige Einheit für die Rufsteuerung ist durch Konfiguration die SIP-Steuerungseinheit 162. Damit erfolgt keine Bearbeitung der SIP-Nachrichten in UMTS bzw. LTE, sondern erst in der SIP-Steuerungseinheit 162 der LA2 des Bündelfunksystems 100.

In Fig. 7 ist der Teilnehmer ein Endsystemteil 161, der in einem Mobiltelefon 164 am UMTS/LTE-Netz 163 installiert ist. Registriert ist der Teilnehmer in der Basisstation 102.2 mit der Nummer 211, siehe Eintrag 166. Er hat aber eine externe IP-Adresse, nämlich die des öffentlichen Mobilfunknetzes 163 zugewiesen. Ein entsprechender SIP-Dienstnutzer 161 kann auch in anderen Sprache-über Internet Protokoll-fähigen Telefonen installiert werden, sodass diese als Bündelfunk-Endgeräte im Bündelfunksystem agieren können.

Die Mobiltelefone 164 mit Bündelfunk-SIP-Dienstnutzern können damit nicht nur die TETRA-Gruppen ergänzen oder die Verbindungen auf diese Geräte schalten, sondern dadurch können die TETRA-Funktionen ergänzt werden. Wenn UMTS oder LTE verfügbar sind, können ergänzende Dienste im TETRA-Netz über die UMTS- bzw. LTE-Schnittstellen transportiert werden. Damit fallen die festgelegten Geschwindigkeitsgrenzen und breitbandigere Anwendungen können unterstützt werden.

Ist UMTS in einem Einsatzfall nicht vorhanden, sind die ergänzenden Merkmale nicht verfügbar und die Leistungsfähigkeit des Gesamtsystems fällt auf TETRA zurück. Für die Benutzer kann sich TETRA als ein Netz mit zwei Komponenten (breitbandig über UMTS und schmalbandig über TETRA) darstellen. Durch eine
entsprechende Integration im Mobiltelefon werden beide Komponenten zu einem Dienstangebot zusammengefasst. UMTS oder LTE können in dieser Konfiguration auch den Abdeckungsbereich des TETRA-Netzes erweitern. Aus Sicherheitsgründen kann die Anwendung als Virtuelles Privates Netz (VPN) innerhalb des UMTS-/LTE Netzes realisiert werden. Der Zugang zum PoC-Dienstanbieter kann damit über beliebige Schnittstellen (UMTS, LTE oder andere IP-Netze) verlängert werden.

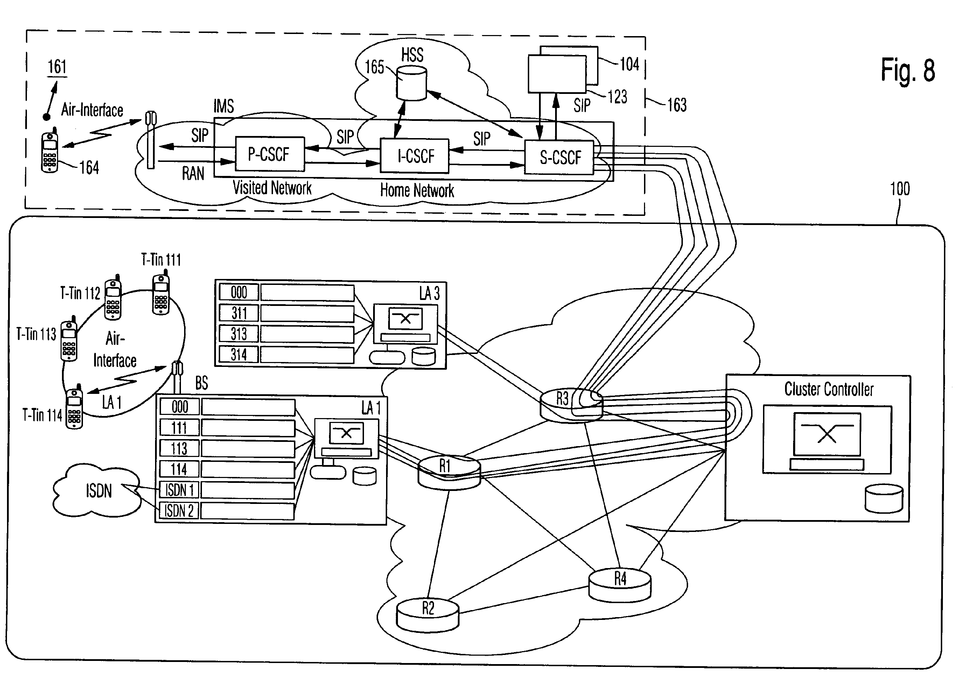

Die Protokolle und Dienststeuerung (SIP und PoC) und die vorgeschlagenen Architekturen orientieren sich an den Definitionen von UMTS und insbesondere an den Festlegungen der Offenen Mobilfunkallianz (Open Mobile Alliance, OMA), wie sie für IMS vorgesehen sind. Damit können, wie in Fig. 8 dargestellt, ein PoC-Dienstanbieter 104 und ein SIP-Dienstanbieter 123 in ein UMTS, LTE oder IMS-Netz 163 aufgenommen werden, d.h. der PoC-Dienstanbieter 104 und der SIP-Dienstanbieter 123 können als Applikations-Dienstanbieter in UMTS, LTE oder IMS wirken. Damit ergibt sich die Möglichkeit die beschriebenen Bündelfunk-Funktionen in einem UMTS-/LTE-Netz einzubringen. Durch Konfiguration des beschriebenen SIP- Endsystemteils 161 im Mobilfunkgerät 164 und eines entsprechenden Eintrags für die Dienstnutzung im Heimat-Teilnehmer-Subsystems (HSS)165 kann ein UMTS-/LTE-Mobiltelefon 164 Zugang zum Bündelfunksystem 100 und Bündelfunk-Endgeräte 101 Zugang zum UMTS-/LTE-System finden.

## Patentansprüche

1. Bündelfunksystem, insbesondere ein TETRA-Bündelfunksystem, beinhaltend ein Bündelfunk-Endgerät (101), eine Bündelfunk-Luftschnittstelle (105), ein Transportnetz, einen Präsenzdienst, eine Aufenthaltsverwaltung und Basisstationen (102), wobei das Bündelfunk-Endgerät dazu ausgebildet ist (101) über die Bündelfunk-Luftschnittstelle (105) mit einer Basisstation (102) in Kontakt zu stehen und zum Austausch von Information eine Kommunikationsverbindung aufzubauen, die Information über das Transportnetz zwischen den Basisstationen (102) überträgt, wobei das Transportnetz ein Übertragungsnetz ist, das auf dem Internet Protokoll basiert, und wobei die Aufenthaltsverwaltung dazu ausgebildet ist den Aufenthaltsort des Bündelfunk-Endgerätes (101) zu überwachen,
**dadurch gekennzeichnet,**
**dass** das Bündelfunksystem dazu ausgebildet ist, dass die Aufenthaltsverwaltung der Bündelfunk-Endgeräte (101) über den Präsenzdienst erfolgt, der für Internet Protokoll , IP -Netze standardisiert ist, sodass bei einer Änderung des Aufenthaltsbereichs eines Bündelfunk-Endgeräts (101.1) von einer Basisstation (102.4) zu einer anderen Basisstation (102.5) die Anmeldung in der anderen Basisstation (102.5) ein Reporting im Präsenzdienst verursacht und alle Basisstationen (102.4, 102.5, 102.6) die Nachricht erhalten, dass sich das Bündelfunk-Endgerät (101) in dem Aufenthaltsbereich der anderen Basisstation (102.5) befindet.

2. Bündelfunksystem nach Anspruch 1,
**gekennzeichnet durch**
ein Verbindungseinleitungsprotokoll , SIP, Session Initiation Protocol zur Steuerung der Kommunikationsverbindung.

3. Bündelfunksystem nach Anspruch 1 oder 2,
**dadurch gekennzeichnet,**
**dass** mindestens ein PoC-Dienstanbieter (104), der auf einem Telekommunikationsstandard für einen Wechselsprechdienst, Push to talk over cellular, Poc basiert, vorhanden ist und dazu ausgebildet ist einen Gruppenruf zu steuern.

4. Bündelfunksystem nach einem der Ansprüche 1 bis 3,
**dadurch gekennzeichnet,**
**dass** das Bündelfunksystem dazu ausgebildet ist, dass die Nachricht an ein virtuelles Endsystemteil in jeder Basisstation (102.4, 102.5, 102.6) gesendet wird.

5. Bündelfunksystem nach einem der Ansprüche 1 bis 4,
**dadurch gekennzeichnet,**
**dass** ein Präsenz-Dienstanbieter (136) in einer Basisstation (102) enthalten ist.

6. Bündelfunksystem nach einem der Ansprüche 1 bis 5,
**dadurch gekennzeichnet,**
**dass** das Bündelfunksystem dazu ausgebildet ist, dass die Kommunikationsverbindung zur Übertragung einer Nutzinformation einen Echtzeitprotokoll/Teilnehmer-Datagramm Protokoll/Internet Protokoll , RTP/UDP/IP -Stapel verwendet.

7. Verfahren zum Betreiben eines Bündelfunksystems nach Anspruch 3,
**dadurch gekennzeichnet,**
**dass** der PoC-Dienstanbieter (104) und eine Verbindungseinleitung-Protokoll, SIP -Steuerungseinheit (123) an ein öffentliches Mobilfunknetz (163), insbesondere ein Universelles Mobiles Telekommunikationssystem, UMTS - oder Langfristiges Evolutions, LTE -Netz, angebunden wird und die Kommunikationsverbindungen des Bündelfunksystems (100) über das öffentliche Mobilfunknetz gesteuert und geführt werden.

## Claims

1. Trunked radio system, in particular a TETRA trunked radio system, comprising a trunked radio terminal unit (101), a trunked radio air interface (105), a transport network, a presence service, a location area management unit and base stations (102), wherein the trunked radio terminal unit (101) is configured to be in contact with a base station (102) via the trunked radio air interface (105) and to set up a communications connection for exchange of information which transmits information about the transport network between the base stations (102), wherein the transport network is a transmission network which is based on the Internet Protocol, and wherein the location area management unit is configured to monitor the location area of the trunked radio terminal unit (101),
**characterised in that**
the trunked radio system is configured so that the location area management for the trunked radio terminal units (101) is effected by means of the presence service which is standardised for Internet Protocol (IP) networks so that when the location area of a trunked radio terminal unit (101.1) changes from one base station (102.4) to another base station (102.5) the log-on in the other base station (102.5) causes reporting in the presence service and all the base stations (102.4, 102.5, 102.6) receive the message that the trunked radio terminal unit (101) is in the location area of the other base station (102.5).

2. Trunked radio system according to claim 1,
**characterised by**
a session initiating protocol (SIP) for controlling the communications connection.

3. Trunked radio system according to claim 1 or 2,
**characterised in that**
at least one Push to talk over Cellular (PoC) server (104), which is based on a telecommunications standard for a Push to Talk over Cellular (PoC) service, is present and configured to control a group call.

4. Trunked radio system according to one of claims 1 to 3,
**characterised in that**
the trunked radio system is configured so that the message is transmitted to a virtual user agent in each base station (102.4, 102.5, 102.6).

5. Trunked radio system according to one of claims 1 to 4,
**characterised in that**
a presence server (136) is contained in a base station (102).

6. Trunked radio system according to one of claims 1 to 5,
**characterised in that**
the trunked radio system is configured so that the communications connection uses a real-time protocol/user datagram protocol/internet protocol (RTP/UDP/IP) stack to transmit useful information.

7. Method for operating a trunked radio system according to claim 3,
**characterised in that**
the Push to Talk over Cellular (PoC) server (104) with a control unit (123) for a session initiating protocol (SIP) is connected to a public mobile radio network (163), in particular a universal mobile telecommunications system (UMTS) or long-term evolution (LTE) network, and the communications connections of the trunked radio system (100) are controlled and managed via the public mobile radio network.

## Revendications

1. Système radio à ressources partagées, en particulier un système radio à ressources partagées TETRA, comportant un terminal radio à ressources partagées (101), une interface radio à ressources partagées (105), un réseau de transport, un service de présence, une gestion de localisation et des stations de base (102), dans lequel le terminal radio à ressources partagées est réalisé de manière à être en contact avec une station de base (102) par l'intermédiaire de l'interface radio à ressources partagées (105) et effectuer une liaison de communication pour un échange d'informations, transmet l'information par l'intermédiaire du réseau de transport entre les stations de base (102), dans lequel le réseau de transport est un réseau de transmission, qui est basé sur un protocole Internet, et dans lequel la gestion de localisation est réalisée de manière à surveiller l'endroit de localisation du terminal radio à ressources partagées (101),
**caractérisé en ce que** le système radio à ressources partagées est réalisé de sorte que la gestion de localisation des terminaux radio à ressources partagées (101) est effectuée par l'intermédiaire du service de présence, qui est standardisé pour des réseaux à protocole Internet, de sorte que lors d'un changement d'une zone de localisation d'un terminal radio à ressources partagées (101.1) d'une station de base (102.4) à une autre station de base (102.5), l'inscription dans l'autre station de base (102.5) entraîne un rapport dans le service de présence et toutes les stations de base (102.4, 102.5, 102.6) reçoivent le message, selon lequel le terminal radio à ressources partagées (101) se trouve dans la zone de localisation de l'autre station de base (102.5).

2. Système radio à ressources partagées selon la revendication 1, **caractérisé par** un protocole d'initialisation de liaison, SIP, Session Initiation Protocol, pour commander la liaison de communication.

3. Système radio à ressources partagées selon la revendication 1 ou 2, **caractérisé en ce que**
il existe au moins un serveur PoC (104), qui est basé sur un standard de télécommunications pour un service d'échange vocal, Push to talk over cellular, Poc, et est réalisé pour commander un appel de groupe.

4. Système radio à ressources partagées selon l'une des revendications 1 à 3, **caractérisé en ce que**
le système radio à ressources partagées est réalisé de sorte que le message est envoyé à une partie d'extrémité de système virtuelle dans chaque station de base (102.4, 102.5, 102.6).

5. Système radio à ressources partagées selon l'une des revendications 1 à 4, **caractérisé en ce que**
un serveur de présence (136) est compris dans une station de base (102).

6. Système radio à ressources partagées selon l'une des revendications 1 à 5, **caractérisé en ce que**
le système radio à ressources partagées est réalisé de sorte que la liaison de communication pour transmettre une information utile utilise une pile de protocole en temps réel/protocole de datagramme de participants/protocole Internet, RTP/UDP/IP.

7. Procédé de fonctionnement d'un système radio à ressources partagées selon la revendication 3, **caractérisé en ce que**
le serveur PoC (104) et une unité de commande de protocole d'initialisation de liaison, SIP, (123) sont reliés à un réseau public de téléphonie mobile publique (163) en particulier un réseau de système de télécommunications mobile universel, UMTS, ou un réseau à évolution à long terme, LTE, et les liaisons de communication du système radio à ressources partagées (100) sont commandées et effectuées par l'intermédiaire du réseau public de téléphonie mobile.
